(19) Europäisches Patentamt
European Patent Office
Office européen des brevets

(11) Veröffentlichungsnummer: **0 003 569**
**B2**

# (12) NEUE EUROPÄISCHE PATENTSCHRIFT

(45) Veröffentlichungstag der neuen Patentschrift: **14.11.84**

(51) Int. Cl.³: **C 08 J 9/34,** C 08 G 18/10

(21) Anmeldenummer: **79100301.5**

(22) Anmeldetag: **02.02.79**

(54) **Verfahren zur Herstellung von Formschaumstoffen auf Polyisocyanat-Basis.**

(30) Priorität: **14.02.78 DE 2806215**

(43) Veröffentlichungstag der Anmeldung: **22.08.79 Patentblatt 79/17**

(45) Bekanntmachung des Hinweises auf die Patenterteilung: **23.07.80 Patentblatt 80/15**

(45) Bekanntmachung des Hinweises auf die Entscheidung über den Einspruch: **14.11.84 Patentblatt 84/46**

(84) Benannte Vertragsstaaten: **BE DE FR GB IT NL SE**

(56) Entgegenhaltungen:
**DE - A - 1 719 121**
**DE - A - 2 261 768**
**DE - B - 1 290 715**
**FR - A - 1 393 412**
**GB - A - 1 368 625**
**JP - A - 53 094 398**
**US - A - 3 752 695**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **König, Eberhard, Dr., Gelber Weg 22, D-6242 Kronberg (DE)**
Erfinder: **Schönfelder, Manfred, Dr., Hoehenstrasse 126, D-5090 Leverkusen 3 (DE)**
Erfinder: **Pedain, Josef, Dr., Haferkamp 6, D-5000 Köln 80 (DE)**

**EP 0 003 569 B2**

## Beschreibung

Die vorliegende Erfindung betrifft ein neues Verfahren zur Herstellung von Formschaumstoffen auf Polyisocyanatbasis mit einer licht- und vergilbungsbeständigen Deckschicht.

Bislang sind noch keine technisch völlig zufriedenstellende Verfahren bekannt geworden, Formschaumstoffe auf Polyisocyanatbasis mit einer licht- und vergilbungsresistenten Deckschicht herzustellen.

Das bereits seit langen Jahren praktizierte Prinzip, derartige Gegenstände nach einem zweistufigen Verfahren dergestalt herzustellen, dass man zuerst in einer Form einen Schaumkern herstellt, und diesen anschliessend mit einer Deckschicht aus den verschiedensten Materialien wie z.B. textilen Geweben, Leder PVC oder Polyurethan bespannt bzw. lackiert ist insbesondere bei unregelmässig geformten Schaumkernen sehr arbeitsintensiv und teuer.

Das ebenfalls seit langen Jahren bekannte Prinzip der Herstellung sogenannter Integralschaumstoffe (vgl. z.B. US-PS Nrn. 3824199, 3726952, 4033912, 4024090, 4058492, 4020001) war bislang wegen der Reaktionsträgheit aliphatischer Polyisocyanate im wesentlichen auf die Verwendung aromatischer Polyisocyanate beschränkt, was naturgemäss nicht zu licht- und vergilbungsresistenten Schaumstoffen führen kann.

Auch die in den Ausführungsbeispielen der US-PS Nr. 3847720 konkret beschriebenen, eine Deckschicht aufweisenden Schaumstoffe sind mit dem gleichen Nachteil behaftet, da auch in den genannten Ausführungsbeispielen der genannten US-Patentschrift zur Herstellung der Deckschicht aromatische Polyisocyanate verwendet werden. Ein Ersatz der aromatischen Polyisocyanate durch zu lichtechten Polyurethanen ausreagierende aliphatische Polyisocyanate hätte bei den Rezepturen der Ausführungsbeispiele der US-PS Nr. 3847720 den Nachteil, dass die Systeme dann selbst in Gegenwart von Katalysatoren bei Raumtemperatur nicht in der erforderlichen kurzen Zeit (10 bis 20 min) zur Aushärtung zu bringen wären.

Auch die DE-OS Nr. 1570524 (=US-PS Nr. 3475266) vermittelt keinen Hinweis zur Herstellung von Formschaumstoffen mit licht- und vergilbungsresistenten Deckschichten, da auch gemäss dieser Offenlegungsschrift ausschliesslich aromatische Polyisocyanate zum Einsatz gelangen. Trotz der Verwendung derartiger aromatischer Polyisocyanate mit einer im Vergleich zu aliphatischen Polyisocyanaten höheren Reaktionsbereitschaft ist im übrigen das Verfahren dieser Offenlegungsschrift noch dadurch kompliziert, dass man sowohl die Komponenten als auch die Form zwecks ausreichender Härtung erwärmen muss.

Die GB-PS Nr. 1368625 befasst sich mit der Herstellung von Polyurethanschaumstoffformkörpern mit einer dichten Aussenhaut, bei welchen zumindest diese Aussenhaut aus einem Reaktionsgemisch hergestellt wurde, dessen Polyisocyanatkomponente zu 1 bis 20% aus einem aliphatischen Polyisocyanat besteht. Irgendwelche näheren Hinweise auf das nachstehend erläuterte erfindungsgemässe Verfahren sind dieser Vorveröffentlichung indessen nicht zu entnehmen.

Die gleiche Feststellung rechtfertigt sich im Hinblick auf die US-PS Nr. 3752695. Diese sich ausschliesslich mit der nachträglichen Beschichtung der Formkörper befassende Literaturstelle lehrt lediglich die Verwendung von NCO-Präpolymeren mit nicht-aromatisch gebundenen Isocyanatgruppen in Kombination mit nicht-aromatischen, freien Polyaminen. Die erfindungswesentlichen, nachstehend näher beschriebenen Härter werden in dieser Vorveröffentlichung nicht erwähnt.

Aufgabe der vorliegenden Erfindung war es daher, ein einfaches, technisch leicht realisierbares Verfahren zur Herstellung von Formschaumstoffen auf Polyisocyanatbasis mit licht- und vergilbungsresistenter Deckschicht zur Verfügung zu stellen. Diese Aufgabe konnte durch das nachstehend näher beschriebene erfindungsgemässe Verfahren gelöst werden.

Gegenstand der vorliegenden Erfindung ist ein Verfahren zur Herstellung von Formschaumstoffen auf Polyisocyanatbasis mit einer kompakten, licht- und vergilbungsbeständigen Deckschicht auf Polyurethanbasis durch Aufschäumen eines zu einem Schaumstoff auf Polyisocyanatbasis führenden Reaktionsgemisches in einer geschlossenen Form, deren Innenwände zumindest teilweise mit der besagten Deckschicht oder einem zu der Deckschicht ausreagierenden Reaktionsgemisch beschichtet sind, dadurch gekennzeichnet, dass man vor Befüllen der Form mit dem schaumfähigen Reaktionsgemisch die Innenwände der Form zumindest teilweise mit einem zu einer licht- und vergilbungsresistenten Deckschicht auf Polyurethan/Polyharnstoff-Basis ausreagierenden, flüssigen, ein Bindemittel sowie gegebenenfalls Lösungsmittel, Verlaufsmittel, Verdickungsmittel, Entformungsmittel, Pigmente und/oder sonstige an sich bekannte Hilfsmittel der Lacktechnologie enthaltenden Beschichtungsmittel beschichtet, wobei das Bindemittel im wesentlichen aus

a) mindestens einem mindestens zwei ausschliesslich aliphatisch und/oder cycloaliphatisch gebundene Isocyanatgruppen aufweisenden NCO-Präpolymeren, und

b) einem sich aus teilweise in ald- oder ketiminblockierter Form vorliegenden primären Polyaminen mit aliphatisch und/oder cycloaliphatisch gebundenen Aminogruppen und Wasser zusammensetzenden Härtergemisch besteht.

Bei der Durchführung des erfindungsgemässen Verfahrens werden vor Befüllen der Form deren Innenwände zumindest teilweise mit einem flüssigen Beschichtungsmittel beschichtet, welches vorzugsweise bei Raumtemperatur innerhalb eines Zeitraumes von ca. 1 bis 10, vorzugsweise 1 bis 5 min so weit aushärtet, dass mit dem zweiten Arbeitsgang, dem Befüllen der Form, begonnen werden kann. Dieser zweite Arbeitsgang erfolgt zu einem Zeitpunkt, zu welchem das auf die Innenfläche der Form aufgetragene Beschichtungsmittel einerseits nicht mehr seine ursprüngliche niedrige Viskosität aufweist, d.h. nicht mehr frei fliessend

ist, andererseits jedoch noch nicht völlig ausgehärtet, d.h. noch klebrig ist. In der Praxis wird man die Befüllung der Form frühestens zu einem Zeitpunkt vornehmen, zu welchem das aufgetragene Beschichtungsmittel beginnt, eine fadenziehende Konsistenz aufzuweisen. Eine fadenziehende Konsistenz liegt dann vor, wenn sich beim Entfernen eines in die Beschichtungsmasse eingebrachten Glasstabs Fadenbildung zeigt.

Das erfindungsgemäss einzusetzende Beschichtungsmittel besteht aus einem Bindemittel und gegebenenfalls den üblichen, aus der Lacktechnologie bekannten Hilfs- und Zusatzmitteln.

Bei dem Bindemittel handelt es sich um ein zu einem Polyurethan/Polyharnstoff ausreagierendes Zweikomponenten-Gemisch aus

a) einem NCO-Präpolymeren, und

b) einem Härter.

Bei den NCO-Präpolymeren handelt es sich um Umsetzungsprodukte von überschüssigen Mengen an Polyisocyanaten mit Polyhydroxylverbindungen.

Geeignete Polyisocyanate zur Herstellung der NCO-Präpolymeren sind beliebige Polyisocyanate, deren NCO-Gruppen nicht an ein benzoides Kohlenstoffatom gebunden sind, d.h. vorzugsweise Polyisocyanate mit aliphatisch und/oder cycloaliphatisch gebundenen Isocyanatgruppen. Die entsprechenden Diisocyanate sind bevorzugt. Die Polyisocyanate zur Herstellung der NCO-Präpolymeren weisen im allgemeinen ein zwischen 112 und 600 liegendes Molekulargewicht auf. Beispiele geeigneter Polyisocyanate sind 1,2-Diisocyanatoäthan, Tetramethylendiisocyanat, Hexamethylendiisocyanat, Dodecamethylendiisocyanat, 1,3-Diisocyanatocyclobutan, 1,4-Diisocyanatocyclohexan, 2,4- und 2,6-Diisocyanatoperhydrotoluol, 2,4- und 4,4'-Diisocyanatodicyclohexylmethan, 1-Isocyanato-3,3,5-trimethyl-5-isocyanatomethylcyclohexan (Isophorondiisocyanat=IPDI) oder p-Xylylendiisocyanat (araliphatische Diisocyanate werden im Rahmen der vorliegenden Erfindung als zu der Gruppe der aliphatischen Diisocyanate gehörend angesehen). Bevorzugte Polyisocyanate sind IPDI, 4,4'-Diisocyanatodicyclohexylmethan und Hexamethylendiisocyanat sowie beliebige Gemische dieser Diisocyanate.

Als Reaktionspartner für die genannten Polyisocyanate zur Herstellung der NCO-Präpolymere kommen Polyhydroxylverbindungen in Frage, die 2 bis 8, vorzugsweise 2 bis 4 Hydroxylgruppen und ein Molekulargewicht von ca. 300 bis 10 000, vorzugsweise 800 bis 3000, aufweisen. Geeignete Polyhydroxylverbindungen sind die entsprechenden, an sich bekannten Polyhydroxy/Polyester, Polyhydroxy/Polyäther, Polyhydroxypolythioäther, Polyhydroxy/Polyacetale, Polyhydroxy/Polycarbonate, Polyhydroxy/Polyesteramide und Polyhydroxy/Polyacrylate. Bevorzugte Polyhydroxylverbindungen sind die entsprechenden Polyhydroxy/Polyester, Polyhydroxy/Polyäther und Polyhydroxy/Polycarbonate. Derartige Polyhydroxylverbindungen gehören als Ausgangsmaterialien zur Herstellung von Polyurethanen zum längst bekannten Stand der Technik und sind beispielsweise in US-PS Nr. 4033912, Kolonne 5, Zeile 14/Kolonne 6, Zeile 56 beispielhaft offenbart.

Zur Herstellung der NCO-Vorpolymerisate können gegebenenfalls auch niedermolekulare Polyole in einer Menge von bis zu 80, vorzugsweise bis zu 50 OH-Äquivalentprozent, bezogen auf Gesamtmenge an Polyhydroxylverbindungen, mitverwendet werden. Es handelt sich hierbei um niedermolekulare Polyole eines unter 300 liegenden Molekulargewichts wie z.B. Äthandiol, Butandiol-1,4 und Trimethylolpropan. In Frage kommen ausserdem beispielsweise noch Propandiol-1,3 und -1,2, Butandiol-1,3, -1,4 und -2,3. Pentandiol-1,5, Hexandiol-1,6, Bishydroxyäthylhydrochinon, Glycerin und N-Methylhydroxyläthylamin.

Die Herstellung der NCO-Vorpolymerisate erfolgt in an sich bekannter Weise, indem man höhermolekulare Polyhydroxylverbindungen und gegebenenfalls Kettenverlängerer mit überschüssigem Polyisocyanat in geeigneter Weise zur Reaktion bringt. Man wählt dabei ein molares NCO/OH-Verhältnis von 1,2 bis 6,0, vorzugsweise von 1,6 bis 3,0.

Die NCO-Präpolymeren weisen im allgemeinen einen NCO-Gehalt von 1 bis 10, vorzugsweise 2 bis 5 Gew.-% auf. Unter NCO-Präpolymeren sind hierbei sowohl echte, d.h. monomerenfreie, Isocyanatgruppen aufweisende Vorpolymerisate als auch deren Gemische mit überschüssigem monomerem Diisocyanat zu verstehen. Dies geht im übrigen bereits aus den gemachten Angaben bezüglich des NCO/OH-Verhältnisses hervor, da beispielsweise bei der Umsetzung von Diisocyanaten mit Diolen in einem über 2:1 liegenden NCO/OH-Verhältnis derartige Lösungen entstehen. Erfindungsgemäss können auch NCO-Präpolymere eingesetzt werden, die aus derartigen Lösungen nach Entfernung des überschüssigen monomeren Diisocyanats bzw. durch Dünnschichtdestillation erhalten werden.

Der beim erfindungsgemässen Verfahren zum Einsatz gelangende Härter besteht aus einem Gemisch von Wasser mit teilweise in ald- bzw. ketiminblockierter Form vorliegenden primären Polyaminen mit ausschliesslich aliphatisch und/oder cycloaliphatisch gebundenen Aminogruppen (auch hier sind araliphatisch gebundene Aminogruppen den aliphatisch gebundenen Aminogruppen gleichzusetzen).

Derartige Härtergemische entstehen beispielsweise durch Umsetzung von primäre, aliphatisch und/oder cycloaliphatisch gebundene Aminogruppen aufweisenden Polyaminen mit Aldehyden oder Ketonen, wobei der Wassergehalt durch Zugabe von weiterem Wasser zu dem bei der Ald- bzw. Ketiminbildung entstehenden Wasser erhöht wird. Grundsätzlich eignen sich zur Herstellung der Härtergemische beliebige organische Verbindungen, welche mindestens 2 primäre, aliphatisch und/oder cycloaliphatisch gebundene Aminogruppen aufweisen sowie beliebige mit diesen Aminen zur Ald- bzw. Ketiminbildung befähigte Aldehyde oder Ketone.

In den erfindungsgemäss einzusetzenden Härtergemischen liegen sowohl freie Aminogruppen als auch Ald- bzw. Ketimingruppen als auch Wasser vor. Für jedes Mol an freien primären Aminogruppen liegen 2,5 bis 6 mol an Ald- bzw. Ketimingruppen und für jedes Mol an Ald- bzw. Ketimingruppen 1,5 bis 4 mol an Wasser vor. Der Gehalt des Gemischs an Gruppen der genannten Art aufweisenden Verbindungen kann gaschromatographisch bestimmt werden.

Die bevorzugten, erfindungsgemäss einzusetzenden Härtergemische leiten sich von Diaminen der Formel

$$H_2N-R-NH_2$$

ab, in welcher R für einen aliphatischen Kohlenwasserstoffrest mit 2 bis 18 Kohlenstoffatomen, der durch Äthersauerstoffbrücken oder NH- bzw. -NX-Brücken ($X=C_1$ bis $C_4$-Alkyl) unterbrochen sein kann, einen cycloaliphatischen Kohlenwasserstoffrest mit 4 bis 15 Kohlenstoffatomen oder einen araliphatischen Kohlenwasserstoffrest mit 8 bis 10 Kohlenstoffatomen steht, wobei zwischen den beiden primären Aminogruppen mindestens 2 Kohlenstoffatome angeordnet sind, und wobei beide primäre Aminogruppen aliphatisch bzw. cycloaliphatisch gebunden sind.

Zur Herstellung der erfindungsgemäss einzusetzenden Härtergemische wird die Polyaminkomponente mit Aldehyden bzw. Ketonen zur Reaktion gebracht. In den bevorzugten, erfindungsgemäss einzusetzenden Härtergemischen liegen Umsetzungsprodukte der genannten bevorzugten Polyamine mit Aldehyden bzw. Ketonen der Formel

$$O=R_1$$

vor, wobei $R_1$ für einen aliphatischen oder cycloaliphatischen Kohlenwasserstoffrest steht, wie er durch Entfernen des Carbonylsauerstoffatoms aus einem aliphatischen bzw. cycloaliphatischen Aldehyd bzw. Keton mit 2 bis 8, vorzugsweise 3 bis 6 Kohlenstoffatomen erhalten wird.

In den erfindungsgemäss bevorzugt einzusetzenden Härtergemischen liegen somit die Verbindungen A, B und C der nachstehenden Konstitution vor, wobei R und $R_1$ die bereits genannte Bedeutung haben.

$$H_2N-R-NH_2 \quad (A),$$
$$H_2N-R-N=R_1 \quad (B),$$
$$R_1=N-R-N=R_1 \quad (C),$$

In den bevorzugt erfindungsgemäss einzusetzenden Härtergemischen liegen die genannten Komponenten A, B, C und Wasser in solchen Mengen vor, die folgenden molaren Verhältnissen entsprechen

$$\frac{A}{B+C}=1:20 \text{ bis } 1:3,$$
vorzugsweise 1:10 bis 1:4
$$\frac{B}{C}=1:2 \text{ bis } 1:6,$$
vorzugsweise 1:2 bis 1:4
$$\frac{A+B+C}{H_2O}=1:1,4 \text{ bis } 1:20,$$
vorzugsweise 1:1,4 bis 1:10

Der Gehalt der erfindungsgemäss einzusetzenden Härtergemische an den genannten Einzelkomponenten kann leicht gaschromatographisch bestimmt werden.

Zur Herstellung der erfindungsgemäss einzusetzenden Härtergemische genügt es, die Polyaminkomponente mit der Aldehyd- bzw. Ketonkomponente und gegebenenfalls Wasser zur vermischen und das Gemisch so lange auf ca. 80° C, vorzugsweise auf Rückflusstemperatur zu erhitzen, bis der Gehalt der Einzelkomponenten den genannten Mengenverhältnissen entspricht. Im allgemeinen ist hierzu ein Erhitzen auf Rückflusstemperatur während ca. 0,5 bis 5 h ausreichend.

Zur Herstellung der erfindungsgemäss einzusetzenden Härtermischungen werden im allgemeinen die Aldehyde bzw. Ketone in solchen Mengen eingesetzt, dass auf jede primäre Aminogruppe der Polyaminkomponente 1 bis 5 Aldehyd- bzw. Ketongruppen entfallen. Oft wird ein Überschuss an Aldehyd und insbesondere Keton verwendet, der dann als Lösungsmittel für das Beschichtungsmittel dienen kann.

Der obigen Verhältniszahlen entsprechende Wassergehalt in den erfindungsgemäss einzusetzenden Härtergemischen kann durch Wasserzugabe vor und/oder nach der Aldimin- bzw. Ketiminbindung eingestellt werden. Selbst bei Verwendung eines hohen Wasserüberschusses bleiben bei Raumtemperatur die Aldimin- bzw. Ketimingruppierungen erhalten.

Zur Herstellung der erfindungsgemäss einzusetzenden Härtergemische und geeigneter Polyamine sind z.B. Äthylendiamin, Trimethylendiamin, Tetramethylendiamin, Hexamethylendiamin, Propylendiamin, das Isomerengemisch von 2,2,4- und 2,4,4-Trimethylhexamethylendiamin, 1,3- und 1,4-Xylylendiamin, Bis-(2-aminoäthyl)amin und Methylbis-(3-aminopropyl)amin.

Bevorzugt sind cycloaliphatische Diamine. Beispielsweise seien hier die folgenden Verbindungen genannt

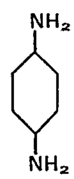
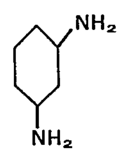
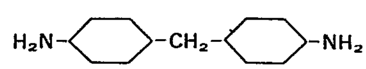
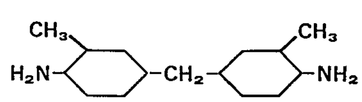
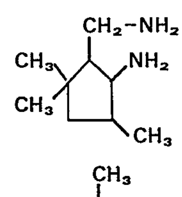
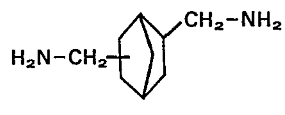
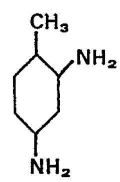
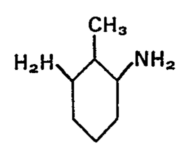
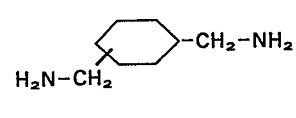

besonders bevorzugt ist

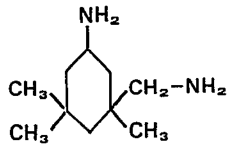

Zur Herstellung der erfindungsgemäss einzusetzenden Härtergemische geeignete Aldehyde bzw. Ketone sind z.B. Butyraldehyd, Isobutyraldehyd, Aceton, Methyläthylketon, Diisopropylketon, Cyclopentanon und Cyclohexanon. Die genannten Ketone sind bevorzugt.

In den erfindungsgemäss einzusetzenden Beschichtungsmitteln liegen das NCO-Präpolymere und das Härtegemisch vorzugsweise in solchen Mengen vor, die einem $NCO/NH_2$-Äquivalentverhältnis bezogen auf die Geamtmenge der freien und der blockierten primären Aminogruppen von 0,9:1 bis 1,3:1, und insbesondere von 1:1 bis 1,1:1 entsprechen. Über den Wassergehalt des Härtergemisches kann hierbei insbesondere bei niedrigen Wasserüberschüssen die Abbindegeschwindigkeit so gesteuert werden, dass einerseits ein guter Verlauf und andererseits ein ausreichend rascher Anstieg der Viskosität bei Raumtemperatur gewährleistet ist, so dass beispielsweise auf senkrechte Formenwände gesprühtes Beschichtungsmittel nicht abtropft.

Es ist grundsätzlich auch möglich, zweistufig dergestalt zu arbeiten, das man dem Härtergemisch einen Teil des NCO-Präpolymeren entsprechend einem $H_2N/NCO$-Äquivalentverhältnis (bezogen auf freie und blockierte primäre Aminogruppen) von 10:1 bis 2:1 einverleibt, so dass eine Lösung eines aminofunktionellen Vorpolymerisats in überschüssigem Härtergemisch entsteht, welche als Härter für die Restmenge des NCO-Präpolymeren bei der Herstellung der Deckschicht verwendet wird. Vorzugsweise setzt man bei dieser Variante des erfindungsgemässen Verfahren in der ersten Stufe so viel des NCO-Präpolymeren mit dem Härtergemisch um, dass in der zweiten Stufe bei Herstellung der Deckschicht etwa gleiche Volumenmengen der beiden Reaktionspartner vorliegen. Auf diese Weise erleichtert man die Dosierung der Spritzanlage und erzielt gleichzeitig eine sehr homogene Vermischung der Reaktionspartner.

In den erfindungsgemäss einzusetzenden Beschichtungsmitteln können neben den aus den Komponenten a und b bestehenden Bindemitteln die üblichen Hilfs- und Zusatzstoffe der Lacktechnologie wie insbesondere Verlaufsmittel, Verdikkungsmittel, Entformungsmittel, Pigmente und Lösungsmittel mitverwendet werden. Der Bindemittelgehalt der erfindungsgemäss einzusetzenden Beschichtungsmittel liegt im allgemeinen zwischen 40 und 80, vorzugsweise 45 und 65 Gew.-%. Vorzugsweise wird lösungsmittelarm gearbeitet, d.h. der Anteil des Lösungsmittels im Beschichtungsmittel ist vorzugsweise kleiner als 50 Gew.-%, besonders bevorzugt kleiner als 40 Gew.-%. Lösungsmittel werden vor allem im Härtergemisch oft deshalb mitverwendet, um die Dosierung zu vereinfachen. Als Lösungsmittel sowohl für das NCO-Vorpolymerisat als auch für das Härtergemisch kommen z.B. in Frage: gegebenenfalls halogenierte Kohlenwasserstoffe wie Toluol, Xylol oder Chlorbenzol; Ester wie Äthylglykolacetat und Äthylacetat; Ketone wie Aceton, Methyläthylketon, Methylisobutylketon und Cyclohexanon. Auch andere übliche Lösungsmittel wie Dimethylformamid können verwendet werden.

Erfindungsgemäss bevorzugt sind jedoch nichttoxische, wenig polare Lösungsmittel. Als Lösungsmittel für das Härtergemisch kommen auch Alkohole wie z.B. Isopropanol, Isobutanol, Äthanol oder Äthylenglykolmonomethyläther in Betracht.

Bei der Durchführung des erfindungsgemässen Verfahrens werden die Beschichtungsmittel in solchen Mengen verwendet, dass die Schichtdicke nach Aushärtung, d.h. die Aussenhaut des Schaumstofformkörpers eine Dicke von 0,1 bis 5, vorzugsweise 0,3 bis 2 mm aufweist.

Die erfindungsgemäss einzusetzenden Beschichtungsmittel zeichnen sich insbesondere dadurch aus, dass sie bei Raumtemperatur während eines Zeitraumes von 1 bis 10, vorzugsweise 1 bis 5 min so weit ausreagieren, dass die Befüllung der Form stattfinden kann.

Die zumindest teilweise Beschichtung der Innenwände der Formen erfolgt durch beliebige Auftragstechniken, wie sie aus der Lacktechnologie bekannt sind, beispielsweise durch Spritzen, Sprühen oder Streichen. Die Vereinigung der das Bindemittel darstellenden Komponenten a und b erfolgt, wie bei Zweikomponentenlacken üblich, kurz vor Gebrauch der Beschichtungsmittel. Die genannten, gegebenenfalls mitzuverwendenden Hilfs- und Zusatzmittel können sowohl der Isocyanatkomponente als auch dem Härter zugemischt werden. Beim Arbeiten nach dem obengenannten Zweikomponentenprinzip werden Zusatzstoffe wie z.B. Pigmente vorzugsweise dem modifizierten Härtergemisch, d.h. dem Gemisch aus $H_2N$-Präpolymer und überschüssigem Härtergemisch zugemischt.

Als Formen dienen beim erfindungsgemässen Verfahren die üblicherweise zur Herstellung von Formschaumstoffen auf Polyisocyanatbasis verwendeten Formen aus Metall oder Kunststoff, die gegebenenfalls mit einer geprägten Haut aus beispielsweise Siliconkautschuk ausgekleidet sind. Die Form sollte so mit einer verschliessbaren Öffnung versehen sein, dass gewünschtenfalls die gesamte Innenfläche beispielsweise mittels einer Spritzpistole mit dem erfindungsgemäss einzusetzenden Beschichtungsmittel besprüht werden kann.

Im Rahmen der vorliegenden Erfindung sind unter Schaumstoffen auf Polyisocyanatbasis beliebige Schaumstoffe zu verstehen, wie sie in an sich bekannter Weise durch Polyadditionsreaktionen (Polyurethanschaumstoffe), Polymerisationsreaktionen (Polyisocyanuratschaumstoffe) oder Polykondensationsreaktionen (Polycarbodiimidschaumstoffe) von organischen Polyisocyanaten zugänglich sind. Die entsprechenden, an sich bekannten Mischungen sind auch denkbar. Vorzugsweise werden beim erfindungsgemässen Verfahren Polyurethanschaumstoffe hergestellt.

Da durch die erfindungswesentliche Massnahme einer zumindest teilweisen Beschichtung der Innenfläche der Form mit dem erfindungswesentlichen Beschichtungsmittel für die Ausbildung einer dichten, vorzugsweise nichtgeschäumten, Aussenhaut bereits Sorge getragen wurde, genügt es, bei der Durchführung des erfindungsgemässen Verfahrens die Form mit einer solchen Menge an schaumfähigem Gemisch zu befüllen, die bei freier Verschäumung ein Schaumstoffvolumen ergibt, welches dem Innenvolumen der Form entspricht. Es ist mit anderen Worten nicht erforderlich, beim erfindungsgemässen Verfahren unter *overcharging* zu arbeiten, wie dies bei den klassischen Verfahren der Herstellung von Formschaumstoffen mit integraler Dichteverteilung üblich ist. Selbstverständlich ist es jedoch möglich, auch beim erfindungsgemässen Verfahren unter *overcharging* der Form zu arbeiten.

Die Frage, ob bei der Durchführung des erfindungsgemässen Verfahrens die gesamte Innenfläche der Form oder nur ein Teil derselben mit einer Deckschicht versehen wird, richtet sich nach dem Verwendungszweck des Formteils. Für Anwendungsgebiete, für welche nur eine teilweise Beschichtung des Formkörpers erforderlich ist, erübrigt sich naturgemäss eine vollständige Beschichtung der Innenfläche der Form.

Die chemische Natur des schaumfähigen Gemischs ist nicht erfindungswesentlich. Zur Herstellung von Formschaumstoffen auf Polyurethanbasis werden die hierzu üblichen Ausgangsmaterialien verwendet.

Beispiele geeigneter Polyisocyanate sind z.B. US-PS Nr. 4033912, Kolonne 3, Zeile 50/Kolonne 4, Zeile 64 zu entnehmen.

Beispiele geeigneter Polyhydroxylverbindungen sind dem gleichen US-Patent in Kolonne 4, Zeile 65/Kolonne 6, Zeile 56 zu entnehmen.

Auch Beispiele geeigneter Hilfsmittel wie z.B. Stabilisatoren, Treibmittel, Katalysatoren u.dgl. können der genannten US-Patentschrift entnommen werden.

Das schaumfähige Reaktionsgemisch kann sowohl ein zu einem weichen als auch zu einem halbharten als auch zu einem harten Polyurethanschaumstoff führen. Die Härte des Schaumstoffs wird in an sich bekannter Weise durch geeignete Wahl der Ausgangsmaterialien eingestellt.

Es ist einer der Hauptvorteile des erfindungsgemässen Verfahrens, dass einerseits zur Herstellung der Schaumstoffe die hierfür besonders gut geeigneten aromatischen Polyisocyanate in Kombination mit den hierfür besonders gut geeigneten Polyätherpolyolen eingesetzt werden können, und dass andererseits trotz der Verwendung der aromatischen Polyisocyanate in einem einfachen Arbeitsgang licht- und vergilbungsresistente Schaumformkörper erhalten werden können.

Im allgemeinen gestattet das erfindungsgemässe Verfahren die Herstellung von licht- und vergilbungsresistenten Formschaumstoffen innerhalb eines Zeitraumes von 10 bis 15 min. Die Aushärtegeschwindigkeit des Beschichtungsmittels kann, wie bereits dargelegt, einfach durch die Wassermenge im Härter gesteuert werden.

Die folgenden Beispiele dienen der weiteren Erläuterung des erfindungsgemässen Verfahrens.

In den nachfolgenden Beispielen werden folgende Vorpolymerisate (NCO-Präpolymere) eingesetzt.

*Vorpolymerisat A*

Im Reaktionsgefäss werden 444 g 1-Isocyanato-3-isocyanatomethyl-3,5,5-trimethylcyclohexan (Isophorondiisocyanat) vorgelegt. Bei Raumtemperatur werden unter Rühren nacheinander 9 g Butandiol-(1,4), 9 g Trimethylolpropan und 1600 g eines Hydroxylpolyesters aus Adipinsäure, Äthylenglykol, Diäthylenglykol und Butandiol-(1,4) mit einer Hydroxylzahl von 56 und einem Molekulargewicht von 2000 zugegeben. Man erwärmt und hält die Reaktionsmischung etwa 1 h (bis zur NCO-Konstanz) bei 110° C. Nach dem Abkühlen auf 65° C wird die Reaktionsmischung mit 412 g Methyläthylketon und 206 g Toluol, entsprechend einer 77%igen Lösung, verdünnt.

Die Vorpolymerisatlösung hat bei 20° C eine Viskosität von 1500 cPo und einen NCO-Gehalt von 2,95%. Daraus errechnet sich ein NCO-Äquivalent von 1425 g.

*Vorpolymerisat B*

Zu 555 g Isophorondiisocyanat gibt man unter Rühren nacheinander 1000 g eines Hydroxylpolyäthers auf Basis von Trimethylolpropan und Propylenoxid mit einer Hydroxylzahl von 56 und einem Molekulargewicht von 3000 sowie 1000 g eines hydroxylpolyäthers auf Basis von Propandiol-(1,2) und Propylenoxid mit einer Hydroxylzahl von 56 und einem Molekulargewicht von 2000. Man erwärmt die Reaktionsmischung und führt die Umsetzung bei 110 bis 120° C so lange (ca. 2 bis 3 h) durch, bis der berechnete NCO-Gehalt von 4,9% knapp unterschritten ist. Das abgekühlte Vorpolymerisat hat bei 20° C eine Viskosität von ca. 3000 cPo und einen NCO-Gehalt von 4,7%. Daraus errechnet sich ein NCO-Äquivalent von 900 g.

*Vorpolymerisat C*

Zu 357 g Hexamethylendiisocyanat werden nacheinander 1000 g eines Hydroxypolycarbonats auf Basis von Hexandiol-(1,4) und Butandiol-(1,4) mit einer Hydroxylzahl von 56 und einem Molekulargewicht von 2000, 275 g eines hydroxylpolyäthers auf Basis von Bisphenol A und Propylenoxid mit einer Hydroxylzahl von 200 und einem Molekulargewicht von 550 sowie 22,5 g Butanol-(1,4) gegeben. Man setzt die Reaktionsmischung bei 100 bis 220° C für ca. 2 bis 3 h um, bis der berechnete NCO-Gehalt von 4,45% knapp unterschritten ist. Danach verdünnt man mit 385 g Methyläthylketon, entsprechend einer 81%igen Lösung. Das abgekühlte Vorpolymerisat hat bei 20° C eine Viskosität von ca. 1500 cPo und einen

NCO-Gehalt von 3,58%. Daraus errechnet sich ein NCO-Äquivalent von 1170 g.

*Vorpolymerisat D*

Zu 2000 g Isophorondiisocyanat werden unter Rühren nacheinander 1600 g eines hydroxylpolyäthers auf Basis von Trimethylolpropan and Propylenoxid mit einer OH-Zahl von 35 und einem Molekulargewicht von 4800, 550 g eines Hydroxylpolyäthers auf Basis von Bisphenol A und Propylenoxid mit einer OH-Zahl von 200 und einem Molekulargewicht von 550, 134 g Trimethylolpropan sowie 130 g Butandiol-(1,4) gegeben.

Man setzt die Reaktionsmischung bei 110 bis 120° C ca. 3 h lang um, bis der berechnete NCO-Gehalt von 8,8% unterschritten ist. Danach wird mit 1900 g Methyläthylketon, entsprechend einer 70%igen Lösung, verdünnt. Das abgekühlte Vorpolymerisat hat bei 20° C eine Viskosität von ca. 1000 cPo und einen NCO-Gehalt von 5,05%. Daraus errechnet sich ein NCO-Äquivalent von 830 g.

In nachfolgenden Beispielen werden folgende Härtermischungen verwendet.

*Härter 1*

Eine Mischung aus 255 g 3,3,5-Trimethyl-5-aminomethylcyclohexylamin (IPDA), 40 g Wasser, 200 g Methylisobutylketon (MIBK) und 605 g Methyläthylketon (MEK) wird 2 h unter Rückfluss gekocht. Nach dem Abkühlen ist die Mischung als Härter gebrauchsfertig. Sie kann aber auch, wie am Beispiel des Härters 4 erläutert, modifiziert werden.

Von den eingesetzten 255 g (1,5 mol) IPDA liegen, der gaschromatographischen Analyse zufolge, in der Härtermischung vor

A) 16,5 Mol-% als freies IPDA
B) 17,6 Mol-% als Mono-IPDA-MEK-Ketimin
2,8 Mol-% als Mono-IPDA-MIBK-Ketimin
C) 49,1 Mol-% als Bis-IPDA-MEK-Ketimin
13,5 Mol-% als Bis-IPDA-MEK-MIBK-Ketimin
0,5 Mol-% als Bis-IPDA-MIBK-Ketimin

Ausserdem sind in der Härtermischung noch insgesamt 79,5 g (4,4 mol) Wasser vorhanden. (Die theoretisch benötigte Menge an Wasser für die hydrolytische Spaltung der Ketimingruppen zu Aminogruppen beträgt 39,5 g.)

Die Molverhältnisse der einzelnen Härterkomponenten haben folgende Werte

$$\frac{A}{B+C} = \frac{16,5}{20,4+63,1} = \frac{1}{5,06}$$

$$\frac{B}{C} = \frac{20,4}{63,1} = \frac{1}{3,04}$$

$$\frac{A+B+C}{H_2O} = \frac{1,5}{4,4} = \frac{1}{2,94}$$

Das $NH_2$-Äquivalent der Härtermischung – hier und im folgenden bezogen auf freie und blockierte Aminogruppen – beträgt 366 g.

*Härter 2*

Es wird eine Härtermischung aus 255 g IPDA, 200 g Methylisobutylketon und 645 g Methyläthylketon ohne zusätzliches Wasser analog Härter 1 hergestellt. Nach der gaschromatographischen Analyse errechnet sich folgende molare Zusammensetzung für die eingesetzten 155 g (1,5 mol) IPDA der Härtermischung

A) 17,9 Mol-% als freies IPDA
B) 15,9 Mol-% als Mono-IPDA-MEK-Ketimin
2,1 Mol-% als Mono-IPDA-MIBK-Ketimin
C) 49,4 Mol-% als Bis-IPDA-MEK-Ketimin
14,0 Mol-% als Bis-IPDA-MIE/MIBK-Ketimin
0,7 Mol-% als Bis-IPDA-MIBK-Ketimin

Ausserdem sind in der Härtermischung noch 37,8 g (2,1 mol) Wasser vorhanden.

Die Molverhältnisse der einzelnen Härterkomponenten haben demnach die folgenden Werte

$$\frac{A}{B+C} = \frac{17,9}{18,0+64,1} = \frac{1}{4,6}$$

$$\frac{B}{C} = \frac{18,0}{64,1} = \frac{1}{3,56}$$

$$\frac{A+B+C}{H_2O} = \frac{1,5}{2,1} = \frac{1}{1,4}$$

Das $NH_2$-Äquivalent der Härtermischung beträgt 366 g.

*Härter 3*

Es wird eine Härtermischung aus 174 g (1,5 mol) Hexamethylendiamin (HDA), 876 g Methyläthylketon und 50 g Wasser analog Härter 1 hergestellt. Nach der gaschromatographischen Analyse liegen von 174 g Hexamethylendiamin (HDA) vor

A) 31,3 Mol-% als freies HDA
B) 18,3 Mol-% als Mono-HDA-MEK-Ketimin
C) 50,4 Mol-% als Bis-HDA-MEK-Ketimin

Ausserdem sind in der Härtermischung noch 82 g (4,58 mol) Wasser vorhanden.

Die Molverhältnisse der einzelnen Härterkomponenten haben demnach folgende Werte

$$\frac{A}{B+C} = \frac{1}{2,2}$$

$$\frac{B}{C} = \frac{1}{2,8}$$

$$\frac{A+B+C}{H_2O} = \frac{1}{3}$$

Das $NH_2$-Äquivalent der Härtermischung beträgt 366 g.

*Härter 4*

Zu 1100 g Härter 1 werden unter Rühren bei Raumtemperatur 900 g Vorpolymerisat B mit einem NCO-Gehalt von 4,6% gegeben. Es entsteht eine klare Härtermischung mit einem Gehalt an Aminostickstoff (N) von 1,4 Gew.-% sowie einem $NH_2$-Äquivalent von 1000 g. Diese Härtermischung wird mit 300 g eines Titandioxidpigmentes abgemahlen und ist danach anwendungsfertig. Die Härtermischung hat eine Viskosität von ca. 200 cPo und ein $NH_2$-Äquivalent von 1150 g.

*Härter 5*

Zu 1100 g Härter 3 werden unter Rühren bei Raumtemperatur 900 g Vorpolymerisat B mit einem NCO-Gehalt von 4,7% gegeben. Die derart modifizierte Härtermischung hat jetzt einen Gehalt an Aminostickstoff (N) von 1,4 Gew.-% sowie ein $NH_2$-Äquivalent von 1000 g. Diese Härtermischung wird mit 300 g eines hellgrünen, pulverförmigen Pigments abgemahlen und ist danach anwendungsfertig. Die Härtermischung hat eine Viskosität von ca. 250 cPo und ein $NH_2$-Äquivalent von 1150 g.

*Härter 6*

Zu 1100 g Härter 1 werden bei Raumtemperatur 540 g Vorpolymerisat B mit einem NCO-Gehalt von 4,7% eingerührt. Zu der entstehenden klaren Lösung fügt man weitere 110 g Isopropanol hinzu. Diese Härtermischung wird mit 250 g eines Titandioxidpigments abgemahlen und ist danach anwendungsfertig. Die Härtermischung hat einen Gehalt an Aminostickstoff (N) von 1,68% und ein $NH_2$-Äquivalent von 833 g.

*Beispiel 1*

In diesem Beispiel wird eine verschliessbare, zur Herstellung eines Motorradsitzes geeignete Metallform verwendet, deren innere Formwände zum Zweck einer besseren Entformung sowie der Erzeugung einer ästhetischen Oberfläche mit einer geprägten Schicht aus Silikonkautschuk ausgekleidet sind.

Die ausgekleideten Innenwände der Form werden mittels einer Zweikomponenten-Spritzanlage mit einem aus Vorpolymerisat A und Härter 4 im Verhältnis ihrer Äquivalentgewichte bestehenden Beschichtungsmittel besprüht.

Die Viskosität der filmbildenden Masse zieht nach 1 min spürbar an. Durch dreimaliges Besprühen wird eine Deckschicht mit einer mittleren Dicke von ca. 0,8 mm aufgebaut. Nach insgesamt 4 min seit Beginn des Besprühens wird ein schaumfähiges Reaktionsgemisch in die Form gefüllt. Dieses schaumfähige Reaktionsgemisch besteht aus

100 Gew.-Teilen eines Hydroxylpolyäthers mit der OH-Zahl 35 sowie dem Molekulargewicht 4800 auf Basis von Trimethylolpropan und Propylenoxid,

12 Gew.-Teilen eines Hydroxylpolyäthers mit der OH-Zahl 280 sowie dem Molekulargewicht 800 auf Basis von Äthylendiamin und Propylenoxid,

2 Gew.-Teilen Wasser als Treibmittel,

5 Gew.-Teilen Monofluorotrichlormethan als Treibmittel,

1 Gew.-Teil Tetramethylguanidin als Katalysator,

1 Gew.-Teil eines Polysiloxan/Polyäthylenoxid-Blockcopolymeren als Schaumstabilisator,

60 Gew.-Teilen an durch Umsetzung mit Tripropylenglykol im NCO/OH-Verhältnis von 5:1 verflüssigtem 4,4-Diisocyanatodiphenylmethan.

Man verfährt dabei so, dass die Polyolkomponenten sowie das Polyisocyanat einem Zweikomponenten-Dosiermischgerät zugeführt, intensiv vermischt und in die zuvor mit der Deckschicht versehene Form gegossen werden.

Es wurde eine solche Menge des schaumfähigen Gemischs verwendet, die bei freier Verschäumung 130% des Volumens der Form einnehmen würde. Die Mischung beginnt kurz nach dem Einfüllen zu schäumen. Nach ca. 10 min kann der fertige, geschäumte Motorradsitz aus der Form genommen werden. Dabei ist die Deckschicht bereits so weit ausgehärtet, dass das geschäumte Teil ohne Beschädigung gestapelt werden kann.

Die Deckschicht des Motorradsitzes wird einem 400-h-Xenotest unterworfen. Dabei kann keine Vergilbung der weiss pigmentierten Oberfläche festgestellt werden. Die lichtbeständige Deckschicht hat die folgenden mechanischen Eigenschaften

| Filmstärke | Zugfestigkeit |
|---|---|
| 0,45 mm | 100% 50 kp/cm² <br> 300% 85 kp/cm² |

| Bruchdehnung | Weiterreisswiderstand |
|---|---|
| 700% | 35 kp/cm |

*Beispiel 2*

Dieses Beispiel soll die unterschiedliche Härtungsgeschwindigkeit der Deckschicht in Abhängigkeit vom Wassergehalt des Härters demonstrieren.

Jeweils 366 g von den Härtern 1 und 2 werden mit 84 g einer Titandioxidpigmentanreibung vermischt, so dass die $NH_2$-Äquivalente beider Härter 450 g betragen. In der Beispiel 1 entsprechenden Weise werden diese Härter mit dem NCO-Vorpolymerisat A im Verhältnis ihrer Äquivalentgewichte verarbeitet. Auch die Schaumrezeptur entspricht derjenigen aus Beispiel 1.

Die geschäumten Teile, die mit dem wasserreichen Härter 1 hergestellt werden, lassen sich bereits nach 7 bis 8 min ohne Beschädigung aus der Form nehmen. Dagegen dauert die Aushärtung der mit dem wasserärmeren Härter 2 hergestellten Deckschicht 15 bis 30 min, so dass erst nach dieser Zeit das geschäumte Teil entformt werden kann.

Die Oberflächen dieser beiden Motorradsitze zeigen nach dem 400-h-Xenotest keinerlei Vergilbung.

*Beispiel 3*

Eine zur Herstellung eines Autositzes geeignete Metallform wird innen mit einer dünnen Siliconkautschukfolie ausgekleidet. Anschliessend werden die ausgekleideten Innenwände der Form mit einem Beschichtungsmittel besprüht, welches durch Mischen des Vorpolymerisats C mit dem Härter 5 im Gewichtsverhältnis 1:1 mittels einer Zweikomponenten-Spritzanlage hergestellt worden war. Die Schichtdicke beträgt ca. 1 mm. Die Form wird mit dem schaumfähigen Reaktionsgemisch aus Beispiel 1 befüllt, wobei die Befüllung ca. 2 min nach Beendigung des Beschichtungsvorgangs erfolgte. Das schaumfähige Gemisch

wurde in einer Menge eingesetzt, die bei freier Verschäumung ca. 130% des Innenvolumens der Form ausfüllen würde. Der Autositz lässt sich 10 bis 15 min nach Einsprühen der Deckschicht ohne Beschädigung entformen. Die hellgrün gefärbte Oberfläche zeigt nach dem 400-h-Xenotest keinerlei Vergilbung.

*Beispiel 4*

Dieses Beispiel soll im Gegensatz zu den bisher beschriebenen geschäumten Teilen, deren Härte im Bereich von Shore A 60 liegt, die Herstellung eines sehr harten geschäumten Teils (Shore Härte D 60) mit einer lichtechten Deckschicht zeigen: In die Form eines Fensterrahmens werden mit der in Beispiel 1 erwähnten Anlage NCO-Vorpolymerisat D und Härter 6 als Komponenten für die lichtechte Deckschicht (Mischungsverhältnis 1 : 1) gesprüht (Schichtdicke: 1,5 mm). Nach ca. 2 min wird eine Mischung für den Hartschaum, die folgende Zusammensetzung hat, eingefüllt

60 Gew.-Teile eines Hydroxylpolyäthers der OH-Zahl 830 sowie dem Molekulargewicht 200 auf Basis von Trimethylolpropan und Propylenoxid,

40 Gew.-Teile eines Hydroxylpolyäthers der OH-Zahl 42 sowie dem Molekulargewicht 4000 auf Basis von Trimethylolpropan und einem Propylenoxid/Äthylenoxid-Gemisch,

1 Gew.-Teil eines Polysiloxan/Polyäthylenoxid-Copolymeren als Schaumstabilisator,

0,7 Gew.-Teile Tetramethylenguanidin als Katalysator,

12 Gew.-Teile Monofluortrichlormethan als Treibmittel, und

134 Gew.-Teile eines durch Phosgenierung von Anilin/Formaldehyd-Kondensat gewonnenen, flüssigen Polyisocyanatgemischs der Diphenylmethanreihe mit einem NCO-Gehalt von 32 Gew.-%.

Nach ca. 12 bis 15 min kann der geschäumte Fensterrahmen entformt werden. Er weist eine Gesamtrohdichte von ca. 0,6 g/cm$^3$ auf und hat nach 1tätiger Lagerung eine Shore-D-Härte von 60. Den 400-h-Xenotest übersteht er ohne Vergilbung.

## Patentansprüche

1. Verfahren zur Herstellung von Formschaumstoffen auf Polyisocyanatbasis mit einer kompakten, licht- und vergilbungsbeständigen Deckschicht auf Polyurethanbasis durch Aufschäumen eines zu einem Schaumstoff auf Polyisocyanatbasis führenden Reaktionsgemisches in einer geschlossenen Form, deren Innenwände zumindest teilweise mit der besagten Deckschicht oder einem zu der Deckschicht ausreagierenden Reaktionsgemisch beschichtet sind, dadurch gekennzeichnet, dass man vor Befüllen der Form mit dem schaumfähigen Reaktionsgemisch die Innenwände der Form zumindest teilweise mit einem zu einer licht- und vergilbungsresistenten Deckschicht auf Polyurethan-Polyharnstoff-Basis ausreagierenden, flüssigen Beschichtungsmittel beschichtet, das ein Bindemittel sowie gegebenenfalls Lösungsmittel, Verlaufsmittel, Verdickungsmittel, Entformungsmittel, Pigmente und/oder sonstige an sich bekannte Hilfsmittel der Lacktechnologie enthält, wobei das Bindemittel im wesentlichen aus

a) mindestens einem NCO-Präpolymeren das mindestens zwei ausschliesslich aliphatisch und/oder cycloaliphatisch gebundene Isocyanatgruppen aufweist, und

b) einem Härtergemisch, das sich aus teilweise in ald- oder ketiminblockierter Form vorliegenden primären Polyaminen mit aliphatisch und/oder cycloaliphatisch gebundenen Aminogruppen und Wasser zusammensetzt, und in dem für jedes Mol an freien, primären Aminogruppen 2,5-6 mol an Ald- oder Ketimingruppen und für jedes Mol an Ald- oder Ketimingruppen 1,5-4 mol Wasser vorliegen, besteht.

2. Verfahren gemäss Anspruch 1, dadurch gekennzeichnet, dass man als zu Schaumstoffen auf Polyisocyanatbasis ausreagierendes Reaktionsgemisch ein zu einem Polyurethanschaumstoff ausreagierendes Reaktionsgemisch verwendet.

3. Verfahren gemäss den Ansprüchen 1 und 2, dadurch gekennzeichnet, dass man die Form mit dem zum Schaumstoff ausreagierenden Reaktionsgemisch befüllt, solange das Beschichtungsmittel noch nicht völlig ausreagiert ist.

## Claims

1. Process for the production of moulded polyisocyanate-based foams, having a compact, light-resistant and yellowing-resistant polyurethane-based covering layer, by foaming a reaction mixture producing a polyisocyanate-based foam in a closed mould, the inner walls of which are at least partly coated with the said covering layer or a reaction mixture reacting to form the covering layer, characterised in that before filling the mould with the foamable reaction mixture the inner walls of the mould are coated at least partly with a liquid coating agent which reacts to form a light-resistant and yellowing-resistant covering layer based on polyurethane-polyurea and which contains a binding agent, as well as, optionally, solvents, levelling agents, thickeners, mould-release agents, pigments and/or other auxiliaries which are used in lacquer technology and are known *per se*, wherein the binding agent consists essentially of

(*a*) at least one NCO prepolymer which contains at least two exclusively aliphatically and/or cycloaliphatically bound isocyanate groups, and

(*b*) a hardener mixture which is composed of primary polyamines which are partly in an aldimine-blocked or ketimine-blocked form and contain aliphatically and/or cycloaliphatically bound amino groups, and water, and in which 2.5 to 6 mol of aldimine or ketimine groups are present per mole of free, primary amino groups and 1.5 to 4 mol of water are present per mole of aldimine or ketimine groups.

2. Process according to Claim 1, characterised in that a reaction mixture reacting to form a polyurethane foam is used as the reaction mixture reacting to form polyisocyanate-based foams.

3. Process according to Claims 1 and 2, characterised in that the mould is filled with the reaction mixture reacting to form a foam, before the coating agent has fully reacted.

## Revendications

1. Procédé pour la préparation de mousses moulées à base de polyisocyanates, comportant une couche extérieure compacte, résistante à la lumière et au jaunissement, à base de polyuréthanne, par moussage d'un mélange de réaction conduisant à une mousse à base de polyisocyanate dans un moule fermé dont les parois intérieures sont, au moins partiellement, enduites avec ladite couche extérieure mentionnée ou avec un mélange de réaction produisant la couche extérieure, ledit procédé étant caractérisé en ce que, avant le remplissage du moule avec le mélange de réaction expansible, on enduit au moins partiellement les parois intérieures du moule avec un agent d'enduction liquide qui réagit en donnant une couche extérieure résistante à la lumière et au jaunissement, à base de polyuréthanne/polyurée, qui contient un liant ainsi que, éventuellement, des solvants, agents d'étalement, agents épaississants, agents de démoulage, pigments et/ou autres agents auxiliaires connus dans la technologie des vernis, le liant consistant essentiellement en:

a) au moins un prépolymère à groupes NCO qui présente au moins deux groupes isocyanate à liaison exclusivement aliphatique et/ou cycloaliphatique, et

b) un mélange durcissant qui se compose de polyamines primaires ayant des groupes amino à liaison aliphatique et/ou cycloaliphatique, partiellement bloquées sous forme aldimine ou cétimine, et d'eau, et dans lequel il y a 2,5 à 6 mol de groupes aldimine ou cétimine pour chaque mole de groupes amino primaires libres, et 1,5 à 4 mol d'eau pour chaque mole de groupes aldimine ou cétimine.

2. Procédé selon la revendication 1, caractérisé en ce que l'on utilise comme mélange de réaction donnant des mousses à base de polyisocyanate un mélange de réaction qui réagit en donnant une mousse de polyuréthanne.

3. Procédé selon les revendications 1 et 2, caractérisé en ce que l'on remplit le moule avec le mélange de réaction produisant la mousse, tant que l'agent d'enduction n'a pas encore totalement réagi.